# FASCICULE DE BREVET EUROPEEN

(11) **EP 0 296 920 B1**
(45) Date de publication et mention de la délivrance du brevet: **03.02.1993**
(21) Numéro de dépôt: 88401404.4
(22) Date de dépôt: 09.06.1988
(51) Int. Cl.: G01N 21/68

(54) **Dispositif d'analyse de surfaces non conductrices**
Vorrichtung zum Analysieren von nichtleitenden Oberflächen
Apparatus for analysing non-conducting surfaces

(30) Priorité: 09.06.1987 FR 8707986
(43) Date de publication de la demande: 28.12.1988
(73) Titulaire: REGIE NATIONALE DES USINES RENAULT, 92109 Boulogne-Billancourt (FR)
(72) Inventeur: Chevrier, Michèle, F-92290 Chatenay-Malabry (FR); Passetemps, Richard, F-92600 Asnières (FR)
(74) Mandataire: Srour, Elie

(56) Documents cités:
- DE-C- 592 518
- FR-A- 2 236 169
- JOURNAL OF APPLIED PHYSICS, vol. 37, no. 2, février 1966, pages 574-579; P.D. DAVIDSE et al.: "Dielectric thin films trough rf sputtering"

## Description

La présente invention se rapporte à un dispositif d'analyse de surfaces non conductrices, telles que par exemple des laques déposées sur des matières synthétiques, par spectrométrie à décharge luminescente, ou SDL.

On connait déjà le principe d'analyse par SDL de surfaces conductrices, permettant d'avoir des informations qualitatives et quantitatives sur les constituants desdites surfaces.

Le principe est basé sur la mesure de l'émission lumineuse qui accompagne le passage d'un courant électrique dans un gaz sous basse pression.

L'échantillon à analyser est placé cathodiquement devant une enceinte sous argon, à la pression de quelques mbar. L'argon ionisé (Ar⁺) sous une différence de potentiel de 400 à 2000 V continu vient bombarder la surface de l'échantillon cathodique et arrache les éléments qui le constituent. Les atomes ainsi libérés sont alors excités par chocs secondaires avec les ions Ar⁺ et les électrons du plasma ; ils émettent, en retombant à un niveau stable ou moins excité, un rayonnement dont la longueur d'onde est caractéristique de l'atome émetteur et dont l'intensité est proportionnelle à sa concentration dans le plasma.

La lumière émise est analysée en continu par un spectromètre.

Le bombardement ionique décrit précédemment conduit à une érosion plane et régulière, ce qui permet l'examen continu des couches disposées à la surface d'un matériau.

Toutefois, ce procédé d'analyse est limité à des échantillons conducteurs ou de faible résistivité, à des couches non conductrices de très faible épaisseur (inférieure à 2 microns), à des échantillons plans de diamètre supérieure à 20 mm.

Le document "Journal of Applied Physics", vol. 37, n^{o}2, février 1986, pages 574-575, ne divulgue pas un procédé d'analyse, mais simplement un procédé de pulvérisation cathodique. L'avantage de ce procédé est qu'il peut s'appliquer à des échantillons isolants, du fait qu'une tension haute fréquence est appliquée entre la cathode et l'anode.

L'objet de la présente invention a pour but de lever les limitations ci-dessus ; elle s'appliquera tout particulièrement, bien que non exclusivement, au domaine de l'automobile.

En effet, dans la quête toujours plus poussée de la qualité des revêtements protecteurs anticorrosion, il devient nécessaire de contrôler qualitativement et quantitativement, la présence des divers éléments constitutifs des couches protectrices, ainsi que l'absence des produits indésirables dans cette structure. Ainsi, on sait que les tôles de carrosserie d'automobile sont successivement pourvues de couches de phosphates, de dépôts intermédiaires cathaphorétiques, de sealer, de laque et de vernis.

Seule la qualité du revêtement de phosphates pourrait être contrôlée par SDL selon le procédé antérieur, avant dépôt des couches suivantes.

La présente invention permet l'étude en continu de toutes les couches ci-dessus, et de contrôler de ce fait leur épaisseur, la distribution des éléments qui les constituent, l'absence de composés indésirables ou la présence de migration entre les strates.

De la même façon, le dispositif d'analyse de l'invention permet d'étudier des produits en matière synthétique, tels que des boucliers de véhicules revêtus de laques et de constater ainsi l'homogénéité et l'épaisseur de ces dernières.

On peut également appliquer le dispositif précédent au contrôle de la qualité des pare-brises collés, particulièrement en vérifiant la propreté du support de verre au niveau de la jonction, la bonne épaisseur et la nature de la liaison résultant du dépôt d'émaux et d'adhésif à sa surface.

D'autres applications de l'invention peuvent être faites, notamment dans le domaine des circuits imprimés, permettant de façon analogue de déterminer les épaisseurs des couches d'encres déposées, la présence d'oxydes indésirables, etc...

La présente invention sera maintenant décrite à titre d'exemple non limitatif, au regard des figures 1 à 3, qui se rapportent respectivement :
- la figure 1, à un schéma d'un dispositif de mise en oeuvre d'une SDL selon l'état antérieur de la technique ;
- la figure 2, à un schéma analogue selon l'invention ;
- la figure 3, à une vue de détail en coupe de l'ensemble anode-cathode de la figure 2.

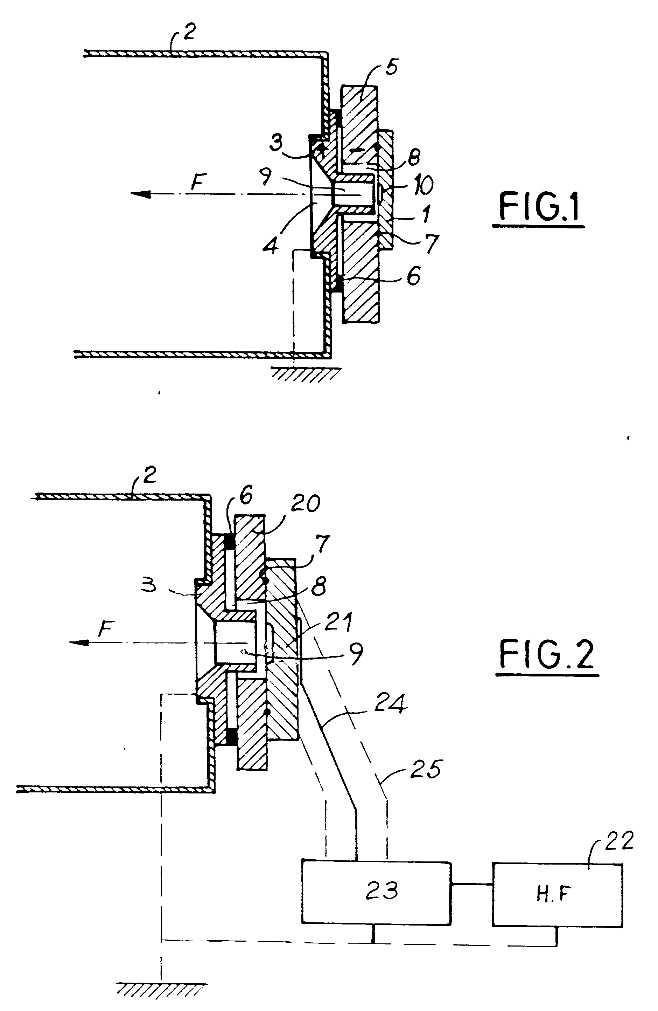

En référence à la figure 1, on voit le schéma d'une lampe de GRIMM utilisée pour le procédé SDL appliqué antérieurement à l'analyse des surfaces conductrices d'un échantillon 1.

Elle est essentiellement constituée d'une enceinte 2 contenant de l'argon sous faible pression.

A l'une de ses extrémités est adaptée une anode 3 en alliage de cuivre, mise à la masse et pourvue d'une ouverture centrale 4. Une cathode 5 lui fait face et supporte l'échantillon conducteur 1 ; elle est portée à un potentiel de - 400 à - 2000 volts. Des joints 6-7 assurent l'étanchéité entre les éléments précédents. Un espacement 8 de l'ordre de 0,15 mm existe entre les électrodes 3-5 ; il est soumis à un vide supérieur à celui de l'enceinte 2 de façon à éviter la création de décharges à cet endroit et de favoriser au contraire leur concentration en 9, face à l'échantillon 1.

En fonctionnement, le bombardement de la zone 10 de l'échantillon par les ions d'argon Ar⁺ arrache des atomes qui le constituent ; ces derniers, excités par des chocs secondaires émettent en retrouvant un niveau stable un ravonnement caractéristique, dont une fraction est dirigée selon la flèche F, puis analysée par un spectromètre non représenté, délivrant en continu des informations qualitatives et quantitatives propres à l'échantillon 1.

La figure 2 représente la modification du dispositif de la figure 1.

On retrouve, comme dans le cas précédent, l'enceinte contenant de l'argon à basse pression, l'anode 3 séparée de la cathode 20 par l'espacement, des joints 6 et 7 assurant l'étanchéité respectivement entre les électrodes 3-20 et l'échantillon non-conducteur 21. Celui-ci est relié à un générateur de courant haute fréquence 22, par l'intermédiaire d'un adaptateur 23 et d'une lame 24, entourée d'un blindage 25 pour éviter le parasitage de l'environnement électronique.

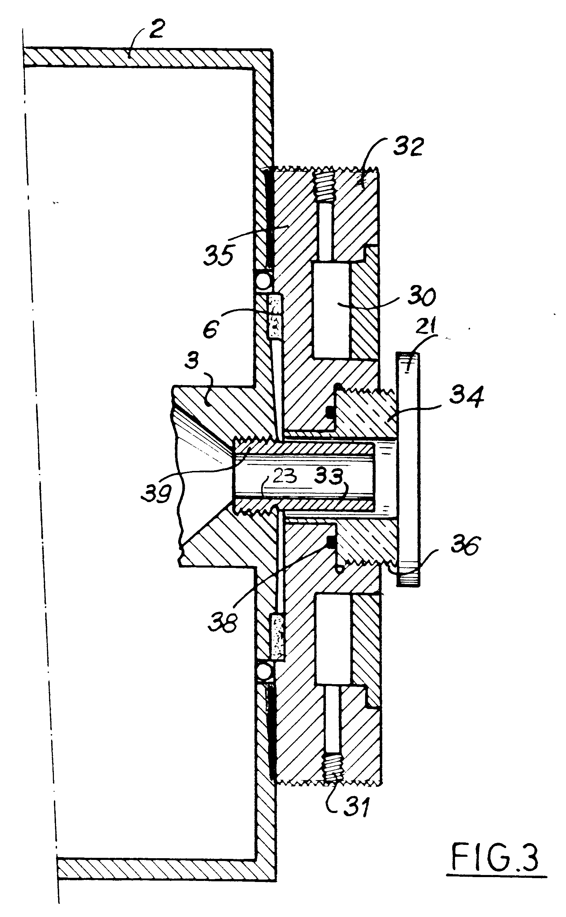

La modification porte essentiellement sur la cathode 20, que l'on verra mieux en détail à la figure 3, et sur l'utilisation d'une source d'alimentation 22 par courant HF, permettant l'analyse d'un échantillon non-conducteur 21.

On sait que ce dernier, quand il est soumis à un potentiel négatif continu selon l'état antérieur de la technique, se chargera positivement sous l'effet d'un bombardement d'ions positifs d'argon : il va par conséquent développer rapidement une barrière de répulsion rendant impossible le passage ultérieur de courant et donc toute émission analysable de ses constituants.

Au contraire, si on applique à l'échantillon une tension alternative à haute fréquence (HF), il se propage à sa surface par effet de peau et la rend négative par phénomène d'autopolarisation.

Son principe est le suivant :
A chaque alternance du courant, la surface de l'échantillon 21 est bombardée par des ions Ar⁺ et par des électrons ; toutefois, la mobilité de ces derniers étant beaucoup plus élevée (de l'ordre de 10⁵ fois), la surface en fixera d'avantage, d'où sa charge négative résultante. Celle-ci attire donc les ions Ar⁺ incidents qui la bombardent, l'érodent et en libèrent les constituants analysables. On se retrouve donc dans les conditions du procédé SDL appliqué aux échantillons conducteurs, permettant ainsi l'investigation de gradients de compositions desdits échantillons 21 non-conducteurs.

A titre d'exemple, le dispositif SDL de la figure 1 a été modifié dans le sens de la figure 2 par l'utilisation d'un générateur HF 422 du type ARF 500 ALCATEL, combiné avec un système d'acquisition SIEMENS/SOCABIM d'une capacité de 30.000 mesures/s. On pourra utiliser conjointement un spectromètre ANALYMAT 2.500 type RSV. La puissance utilisée est de l'ordre de 30 à 100 watts et la fréquence préférentiellement de 13,56 MHz.

Outre l'alimentation, l'invention porte également sur la structure de la cathode 20, que l'on voit en détail à la figure 3. Son originalité réside dans le fait qu'elle est composite ; elle demeure, pour partie, identique à la cathode utilisée pour la SDL classique.

Sa masse 35 est pour l'essentiel en alliage de cuivre ; elle comporte une circulation 30-31 de fluide de refroidissement et sa périphérie 32 est filetée, de manière à permettre la fixation d'une couronne, non figurée, supportant divers organes annexes, tels que des moyens de maintien de l'échantillon 21 et de nettoyage périodique de la partie interne 23 de l'anode 3 déjà présents dans ce dispositif SDL classique.

La cathode selon l'invention diffère toutefois de celle 5 de la figure 1 en ce que sa partie centrale comporte une partie démontable 34. Celle-ci est solidarisée dans le corps principal 35 par vissage dans un alésage 36 percé sur la moitié environ de l'épaisseur de la cathode.

La partie démontable 34 est en un matériau isolant tel qu'une céramique et possède un diamètre extérieur inférieur à celui de l'échantillon 21 à analyser ; par exemple, ces derniers peuvent être respectivement de l'ordre de 20 et 30 mm ; sa partie interne est constituée par un tube dont la longueur correspond à l'épaisseur de l'électrode 35.

Par ailleurs, elle présente une surépaisseur de quelques mm suffisante pour éviter tout contact électrique entre l'échantillon 21 et le corps principal 35 de la cathode ; un joint torique 38 assure l'étanchéité entre ces deux éléments.

On notera que la partie centrale 39 de l'anode 3 peut également être démontable, ce qui permet de changer le couple 33-34 et de l'adapter aux besoins de l'analyse, notamment aux dimensions des échantillons 37 qui peuvent de ce fait avoir des diamètres plus ou moins grands, sans changer la totalité de la cathode.

La disposition qui vient d'être décrite présente de nombreux avantages :
- Le courant HF est concentré dans la seule partie en céramique de faible diamètre 34 ; ceci autorise une plus faible puissance du générateur et un réglage plus facile du dispositif, tout particulièrement de son impédance, ce qui ne serait pas le cas si la totalité de la cathode 32 était en cuivre ; de plus, compte tenu de la fragilité de la céramique et des difficultés à la travailler, la fixation sur sa périphérie des organes annexes déjà évoqués serait source de grandes difficultés techniques.
- L'utilisation de pièces 34 de petit diamètre permet l'étude de petites pièces, d'éviter les défauts de planéité et de localiser précisément les défauts à analyser, fréquemment figurés par des taches.
- Le démontage aisé du couple constitué par la partie centrale 39 de l'anode et l'élément 34 en céramique permet, outre un changement de dimension, d'autoriser également un changement de matériau, et par exemple de revenir au système SDL classique en utilisant des éléments en un alliage de cuivre. C'est ainsi qu'avec un même ensemble de matériels on peut utiliser aisément une technique ou l'autre ; le passage de l'analyse d'un matériau conducteur à un matériau non-conducteur est, dans ces conditions, très rapide, car il n'implique en effet aucun démontage complet de la lampe de GRIMM, ni réglage minutieux consécutif de la concentricité des éléments, du parallélisme des électrodes, ni dépose des organes annexes, etc...

## Revendications

1. Dispositif pour la mise en oeuvre d'un procédé d'analyse d'une surface par spectrométrie à décharge luminescente, utilisant un courant haute fréquence pour la création de la décharge entre une anode (3) et une cathode (20) en alliage de cuivre qui se propage par effet de peau sur un échantillon non-conducteur (21) à analyser, dans lequel la cathode possède un corps (35) extérieur et une partie centrale démontable (34) en un matériau isolant qui possède un diamètre extérieur inférieur à celui de l'échantillon (21) à analyser, et dans lequel ladite partie centrale émerge du corps (35) de la cathode afin d'éviter tout contact électrique entre l'échantillon (21), placé sur cette partie centrale, et le corps (35) et se prolonge au niveau du diamètre interne du corps (35) par un tube jusqu'à atteindre la surface de la cathode (20) faisant face à l'anode (3).

2. Dispositif selon la revendication 1, caractérisé en ce que la partie centrale (39) de l'anode (3) est démontable et constitue avec la partie centrale (34) de la cathode un ensemble amovible et remplaçable par un ensemble différant par les dimensions de la cathode et par la nature de sa matière.

3. Dispositif selon la revendication 1, caractérisé en ce que la partie centrale démontable (34) de la cathode (20) est vissée dans un taraudage du corps (35) de la cathode sensiblement sur la moitié de l'épaisseur dudit corps.

## Claims

1. Apparatus for carrying out a process for the analysis of a surface by luminescent discharge spectrometry using a high-frequency current for the creation of the discharge between an anode (3) and a cathode (20) of copper alloy which is propagated by a skin effect over a non-conducting sample (21) to be analysed, wherein the cathode has an eternal body (35) and a central removable portion (34) of an insulating material which is of a smaller external diameter than that of the sample (21) to be analysed and wherein said central portion emerges from the body (35) of the cathode in order to avoid any electrical contact between the sample (21) which is placed on said central portion and the body (35) and is prolonged at the location of the internal diameter of the body (35) by a tube until it reaches the surface of the cathode (20) facing the anode (3).

2. Apparatus according to claim 1 characterised in that the central portion (39) of the anode (3) is removable and with the central portion (34) of the cathode constitutes a removable assembly which can be replaced by an assembly differing by virtue of the dimensions of the cathode and the nature of its material.

3. Apparatus according to claim 1 characterised in that the removable central portion (34) of the cathode (20) is screwed into a screwthread in the body (35) of the cathode substantially over half the thickness of said body.

## Patentansprüche

1. Vorrichtung zur Durchführung eines Verfahrens zum Analysieren einer Oberfläche mittels Lumineszenzentladungs-Spektrometrie unter Verwendung eines Hochfrequenz-Stromes zur Erzeugung der Entladung zwischen einer Anode (3) und einer Kathode (20) aus Kupferlegierung, wobei sich die Entladung mittels des Skin-Effektes auf einer zu untersuchenden nichtleitenden Probe (21) ausbreitet und die Kathode ein Außenteil (35) und ein abnehmbares Innenteil (34) aus isolierendem Material aufweist, mit einem Außendurchmesser kleiner als derjenige der zu untersuchenden Probe (21); das Innenteil ragt aus dem Außenteil (35) der Kathode heraus, um jeglichen elektrischen Kontakt zwischen der auf diesem Innenteil angeordneten Probe (21) und dem Außenteil (35) zu verhindern, wobei es auf Höhe des Innendurchmessers des Außenteils (35) durch eine Rohr verlängert ist, das bis zur Oberfläche der Kathode (20) ragt, die der Anode gegenüberliegt.

2. Vorrichtung nach Anspruch 1, dadurch gekennzeichnet, daß der mittlere Abschnitt (39) der Anode (3) abnehmbar ist und zusammen mit dem mittleren Abschnitt (34) der Kathode eine lösbare Anordnung bildet, die austauschbar ist durch eine Anordnung, die sich in ihren Abmessungen unter Auswahl ihres Materials von der Kathode unterscheidet.

3. Vorrichtung nach Anspruch 1, dadurch gekennzeichnet, daß der abnehmbare mittlere Abschnitt (34) der Kathode (20) in ein Gewinde des Kathodenteils (35) bis etwa zur Hälfte der Dicke des Teils eingeschraubt ist.
